# DEMANDE DE BREVET EUROPEEN

(11) **EP 0 605 326 A1**
(43) Date de publication de la demande: **06.07.1994**
(21) Numéro de dépôt: 93403199.8
(22) Date de dépôt: 28.12.1993
(51) Int. Cl.: G01D 3/08, B62D 5/04

(54) **Capteur de mesure, dispositif de mesure associé et application à un dispositif de direction assistée de véhicule**

(30) Priorité: 30.12.1992 FR 9215948
(71) Demandeur: VALEO SYSTEMES D'ESSUYAGE, 78180 Montigny-Le-Bretonneux (FR)
(72) Inventeur: Desrus, Dany, F-94260 Fresnes (FR)
(74) Mandataire: Gamonal, Didier

(57) **Abrégé**

L'invention concerne un capteur et un dispositif de mesure associé audit capteur. Elle concerne aussi une application à une direction assistée de véhicule.

Le capteur de l'invention comporte deux moyens générateurs d'une première représentation du signal représentatif de la grandeur mesurée à l'aide d'un modulateur en largeurs d'impulsions 34 ainsi qu'un circuit amplificateur 37 qui produit une valeur analogique qui est une seconde représentation du signal de mesure du capteur. D'autre part, le capteur comporte une sortie 44 de surveillance de l'état de l'alimentation du capteur.

Les trois signaux sont exploités par un dispositif de mesure associé qui détecte les défaillances éventuelles du capteur.

Application à la direction assistée de véhicule

## Description

L'invention concerne un capteur et un dispositif de mesure associé audit capteur. Elle concerne aussi une application à une direction assistée de véhicule.

Dans l'art antérieur on connaît des dispositifs d'asservissement dans lesquels l'un des paramètres de commande est produit par un capteur d'une grandeur physique. Dans le cas de la direction assistée, un tel paramètre est fréquemment le couple exercé par le conducteur sur la colonne de direction par l'intermédiaire du volant. Dans une telle application, une défaillance du capteur de couple peut conduire à une interprétation par le calculateur associé d'une action du conducteur sur le volant et peut conduire à une assistance intempestive. Une telle situation est catastrophique.

Dans l'art antérieur, on a déjà proposé des capteurs qui comportent deux cellules de détection susceptibles de produire deux signaux représentatifs de la même grandeur physique. Dans de tels capteurs, l'incohérence entre les deux mesures est une indication d'alarme d'un état de défaillance qui peut donc être interprété convenablement par le calculateur associé.

En particulier, on a déjà proposé des dispositifs dans lesquels la cellule de détection est du type à inductance variable ou encore est du type à transformateur différentiel. Dans un tel cas, chaque cellule de détection est alimentée par une tension continue et de plus reçoit un signal périodique qui permet de réaliser la mesure. Dans ce cas, le signal de sortie produit par le capteur est de type analogique continu, c'est-à-dire qu'il ne donne pas d'information sur la fréquence interne de fonctionnement du capteur. Dans ce cas, une dérive en fréquence de l'oscillateur peut conduire à une dérive identique des deux signaux de sortie sans détection possible par le calculateur.

D'autre part, un tel type de capteur ne permet pas de détecter une défaillance brutale du capteur. Une telle défaillance n'est possible que si le capteur produit des signaux qui sortent d'une plage fixée par avance et qui est la plage de dynamique de fonctionnement du capteur. Une telle situation de panne est improbable et ne tient pas compte de toutes les situations de pannes qui peuvent survenir.

Enfin, le capteur est alimenté en tension continue et une baisse de la tension continue d'alimentation effective reçue par le capteur peut entraîner une dérive plus ou moins forte des signaux de sortie du capteur. De ce fait, si le capteur ne délivre pas une information sur l'état de son alimentation cette dérive sera analogue à une action ou une modification de la grandeur physique mesurée par le capteur.

L'invention apporte un remède au problème précité de l'art antérieur.

En effet, l'invention concerne un capteur du type comportant au moins une cellule de détection d'une grandeur physique, alimentée par une tension d'alimentation et/ou par un signal périodique.

L'invention se caractérise en ce que la cellule de détection produit un signal de sortie ou information de mesure qui est fourni à l'entrée de modulation d'un circuit à modulation de largeur d'impulsion, dont l'entrée de référence reçoit ledit signal périodique, et dont le rapport cyclique est une représentation de l'information de mesure délivrée par la cellule de détection.

D'autre part, l'invention concerne aussi un dispositif de mesure connecté à un capteur. Le dispositif de mesure comporte un circuit de détection d'un défaut de transition sur l'une des transitions du signal en modulation à largeur d'impulsions, dont la sortie est connectée de façon à activer un circuit d'une action d'alarme spécifique.

Enfin, l'invention concerne une application à un dispositif de direction assistée de véhicule, dans lequel le capteur est un capteur de couple volant et dans lequel le dispositif de mesure est un calculateur de direction assistée.

D'autres avantages et caractéristiques de la présente invention seront mieux compris à l'aide de la description et des dessins annexés qui sont :
- la figure 1 : un schéma d'un capteur selon l'art antérieur ;
- la figure 2 : un schéma d'un autre mode de réalisation d'un capteur de l'art antérieur ;
- la figure 3 : un premier mode de réalisation selon l'invention ;
- la figure 4 : un graphique représentatif du fonctionnement d'une partie de la figure 3 ;
- la figure 5 : des diagrammes représentants différentes situations du signal de sortie produit par la figure 3 ;
- la figure 6 : un schéma de variation du signal de sortie du dispositif de la figure 3 ;
- la figure 7 : un autre mode de réalisation du capteur selon l'invention ;
- la figure 8 : un schéma d'une première partie d'un dispositif de mesure selon l'invention ;
- les figures 9 et 10 : des graphiques représentatifs des valeurs du signal d'entrée fautif fournit à l'entrée du dispositif de la figure 8 ;
- les figures 11 à 13 : des seconde, troisième et quatrième parties du dispositif selon l'invention ; et
- la figure 14 : le schéma d'une direction assistée de véhicule auquelle l'invention est appliquée.

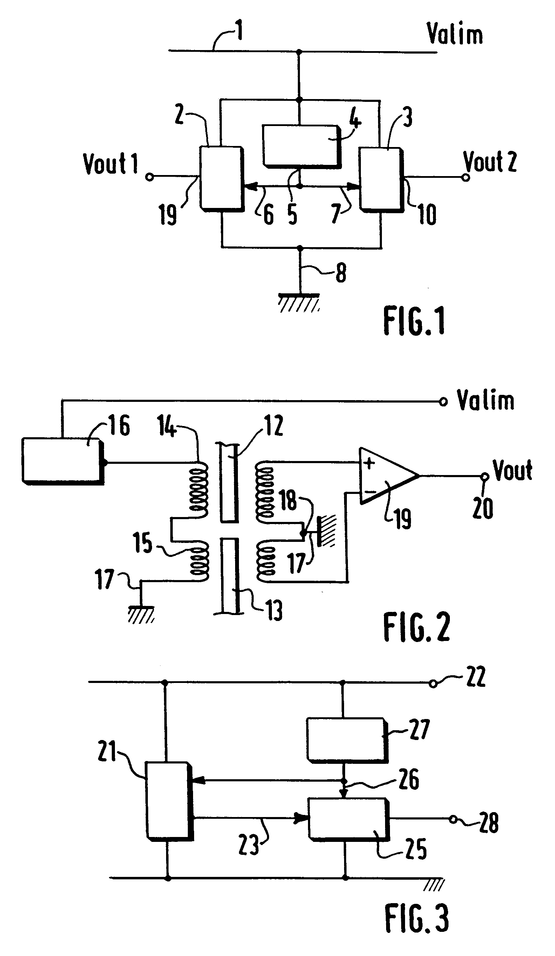

A la figure 1, on a représenté un premier mode de réalisation de capteur selon l'art antérieur. Un tel capteur comporte une source d'alimentation électrique 1 qui produit une tension continue Valim qui est transmise d'une part à une première cellule de détection 2 et d'autre part à un deuxième cellule de détection 3 et qui est fourni aussi à un oscillateur 4 qui produit un signal périodique 5 qui est fournit à des entrées correspondantes respectivement 6 et 7 des cellules de détection 2 et 3. Les cellules de détection 2 et 3 sont ensuite raccordées à une tension continue de référence comme la masse électrique locale 8. Enfin chaque cellure de détection produit un signal de sortie par une borne respectivement 9 pour cellule de détection 2 et 10 pour la cellule de détection 3 qui produisent respectivement un premier signal de sortie Vout1 et Vout2. Les deux signaux Vout1 et Vout2 sont des signaux analogiques qui représentent la même grandeur physique mesurée par les cellules de détection 2 et 3. Cette disposition permettait de détecter d'éventuels défauts de cohérence entre les évolutions des signaux Vout1 et Vout2 pour en décider de l'état de bon fonctionnement ou non du capteur.

A la figure 2, on a représenté un autre mode de réalisation d'une cellule de détection du capteur de la figure 1. Dans ce dispositif, la cellule de détection comporte deux parties respectivement 12 et 13 réalisées en un matériau magnétique et qui sont sensibles de façon différentielle à un même phénomène physique. Dans l'application du capteur de couple de la direction assistée, la partie en matériau magnétique 12 est liée à la rotation d'un arbre d'entrée du capteur tandis que la seconde partie 13 est liée à un arbre de sortie du capteur. L'arbre d'entrée est connecté mécaniquement au volant tandis que l'arbre de sortie est lié mécaniquement au mécanisme de direction.

L'arbre d'entrée et l'arbre de sortie sont reliés par exemple par un organe élastique comme une barre de torsion qui a tendance à les conserver alignés l'un par rapport à l'autre. L'écart de rotation entre l'arbre d'entrée et l'arbre de sortie est représentatif d'un couple exercé. De ce fait, l'écart de position entre les parties magnétiques 12 et 13 est représentatif du couple exercé sur le volant. Pour détecter cette variation différentielle, il est possible d'utiliser un transformateur différentiel qui a été représenté schématiquement à la figure 2.

Le primaire du transformateur est constitué de deux enroulements connectés en série respectivement 14 et 15 dont une première borne est connectée à un oscillateur 16 analogue à l'oscillateur 4 de la figure 1 et à une tension de référence comme la masse 17 par l'autre extrémité.

Le secondaire du transformateur est constitué par deux enroulements connectés en parallèles dont le point commun 18 est connecté à la masse électrique par exemple et dont les extrémités libres sont respectivement connectées aux bornes "+" et "-" d'un amplificateur différentiel 19. Le signal de sortie Vout est disponible à la borne de sortie 20. D'autre part la tension d'alimentation est fournie d'une part à une entrée convenable de l'amplificateur différentiel 19 et à une borne convenable de l'oscillateur 16.

Dans un tel dispositif, c'est la même tension d'alimentation qui alimente l'ensemble du capteur. De ce fait la tension de sortie Vout de chaque cellule de détection varie de la même façon si la tension d'alimentation varie. De même, dans l'hypothèse où une partie du transformateur différentiel deviendrait défaillant suite à un court-circuit entre spires ou à une cassure entre spires, une telle situation ne serait pas forcément susceptible d'être interprétée comme une panne mais plutôt comme une action sur la direction assistée.

Une telle situation est profondément dangereuse pour les dispositifs de sécurité notamment comme les dispositifs de direction assistée de véhicule.

Selon l'invention, le capteur utilise un codage qui permet de rendre compte immédiatement ou aussi vite que possible d'une défaillance éventuelle du système de détection constitué par la cellule de détection.

A la figure 3, on a représenté un premier mode de réalisation d'un tel capteur dans lequel le signal de sortie de la cellule de détection 21 lui-même connecté à une borne d'alimentation continue 22, est connecté à l'entrée de modulation d'un circuit 24 à modulation en largeur d'impulsions. Le signal de sortie de la cellule de détectiion 21 constitue l'information de mesure. Elle peut prendre toute forme physique connue. L'entrée de l'oscillation porteuse 26 est connectée à un oscillateur 27 lui-même relié ou alimenté par la borne d'alimentation continue 22. L'oscillateur 27 est préférentiellement l'oscillateur d'excitation de la cellule de détection 21.

La sortie 28 du circuit en modulation de largeur d'impulsions sert à produire une représentation de l'information de mesure délivrée par la sortie 23 de la cellule de détection 21.

Dans le système de modulation de largeur d'impulsions, le signal de sortie est à fréquence constante. La valeur du signal d'entrée sert à moduler le rapport cyclique du signal en modulation à largeur d'impulsions. Le rapport cyclique est défini comme le rapport entre la durée pendant laquelle le signal est au niveau Haut pendant une période et la période préfixée du signal.

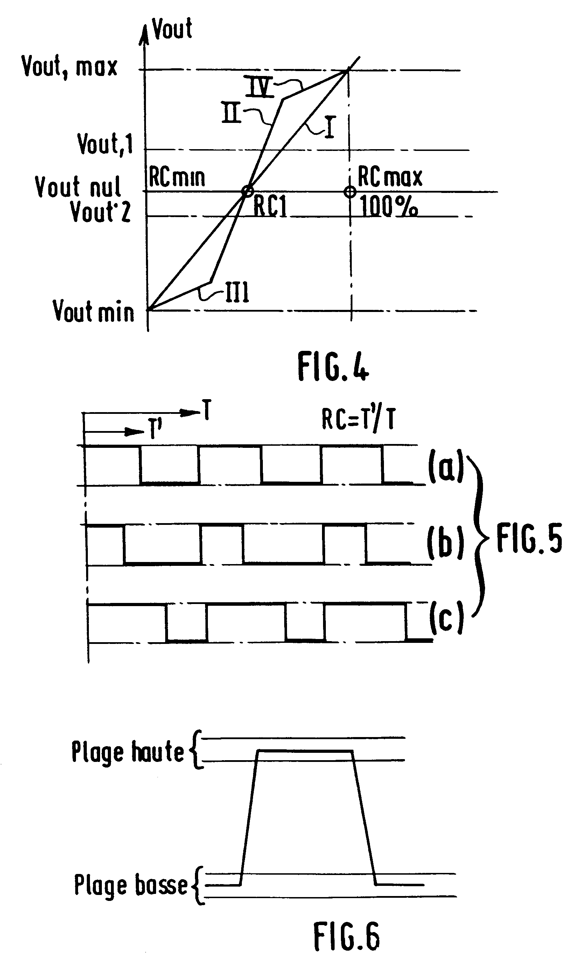

A la figure 4 on a représenté le graphique de diverses tensions de sortie de la cellule de détection et de la valeur du rapport cyclique représentée en pourcentage, en abscisse.

Dans cette configuration, la tension de sortie de la cellule de détection Vout varie entre une valeur miminale Vout,min et une valeur maximale Vout,max. Entre ces deux valeurs, la tension de sortie de la cellule de détection correspond à une valeur Vout,nul qui correspond à l'état de repos du capteur. Dans le cas particulier du capteur de couple la valeur Vout,nul représente l'absence de couple exercé par le conducteur sur la direction.

Dans cette configuration, le rapport cyclique est déterminé de façon à ce que le rapport cyclique RC1 représentatif de la valeur Vout,nul soit à mi-distance entre les valeurs extrêmes atteintes par le rapport cyclique RCmax et RCmin correspondant respectivement à Vout,max et Vout,min.

Ceci est particulièrement souhaitable dans le cas où le capteur est sensiblement linéaire comme il est représenté dans la courbe I.

Dans un cas particulier, il est possible de coder le rapport cyclique en fonction non linéaire de la tension Vout de façon à ce que la sensibilité du capteur soit maximale autour de l'état d'équilibre par exemple ou inversement selon le sens des pentes des courbes respectivement II et III et IV.

Dans le cas de la figure 4, l'ensemble des courbes III,II et IV correspond à un capteur plus sensible autour du point neutre.

A la figure 5, on a représenté trois situations de la tension en sortie du circuit 25 du capteur de la figure 3. Au diagramme a, on a représenté le cas où la tension de sortie de la cellule de détection appliquée à la borne d'entrée 23 du circuit 25 vaut Vout,nul qui correspond à un capteur à l'état stable. Dans ce cas, on peut choisir par exemple un rapport cyclique RC1 valant 50%. Quand la tension de sortie est par exemple négative si Vout,nul vaut zéro, le rapport cyclique représenté au diagramme b est plus petit que celui dans le cas du diagramme a. A l'inverse, quand le rapport cyclique correspond à une tension Vout,1 plus grande que Vout,nul, le rapport cyclique représenté au diagramme c de la figure 5 est plus long que celui de la figure 5 diagramme a.

Pour fixer la valeur RC1 qui correspond à la représentation de l'information de signal de sortie nul, on choisit une valeur prédéterminée du rapport cyclique valant 50%. Dans un exemple plus général, on choisit RC1 égal à la moyenne algébrique entre les valeurs extrêmes RCmax et RCmin prises par le rapport cyclique.

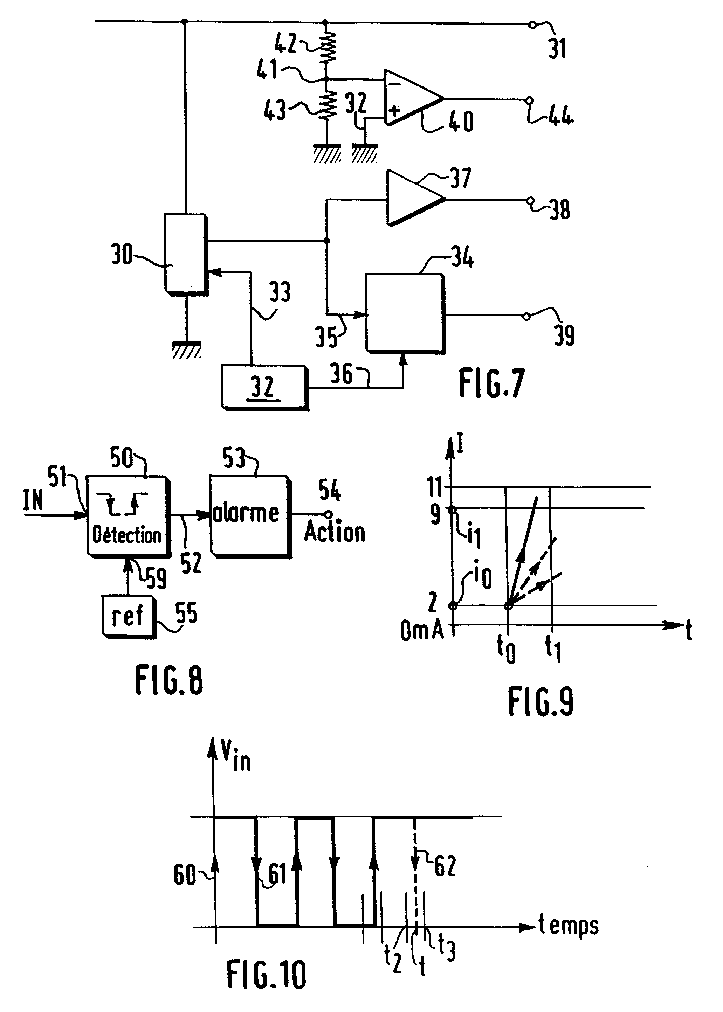

Dans un mode de réalisation particulier, le signal de sortie de la cellule de détection est aussi fourni à l'entrée d'un amplificateur analogique dont l'amplitude de sortie est une seconde représentation de l'information de mesure délivrée par la cellule de détection. Cette situation est représentée dans le capteur représenté à la figure 7.

A la figure 7, la cellule de détection 30 reçoit la tension d'alimentation 31 et le signal provenant de l'oscillateur 32 par une sortie 33. Le signal de sortie de la cellule de détection est distribué d'une part au circuit de modulation en largeur d'impulsions décrit précédemment et ici référencé 34 par une entrée 35. L'oscillateur 32 produit aussi une sortie destinée à l'entrée de porteuse 36 du circuit 34. La sortie de la cellule de détection 30 est aussi transmise à l'amplificateur 37 dont la sortie 38 est aussi une représentation de l'information de mesure produit par la cellule de détection 30.

Dans le mode de réalisation représenté à la figure 7, le capteur comporte aussi un circuit de transmission d'un signal représentatif de l'état d'alimentation du capteur. Dans l'exemple de réalisation de la figure 7, le circuit de transmission est constitué principalement par un amplificateur adaptateur 40 dont une borne positive est connectée au point commun 41 entre deux résistances 42 et 43 connectées entre la ligne d'alimentation continue 31 et la masse électrique 32.

Le signal de sortie 44 de l'amplificateur 40 est un signal qui représente l'état de l'alimentation du capteur. En particulier, en réglant convenablement le réseau de rétroaction (non représenté) de l'amplificateur 40, il est possible que la tension de sortie 44 fasse 5 Volts ou une autre tension nominale prédéterminée quand la tension d'alimentation 31 est dans une plage de bon fonctionnement. Par contre, quand la tension d'alimentation 31 ne se trouve pas dans la plage d'alimentation convenable, l'amplificateur adaptateur 40 place sa sortie à O Volt ce qui peut être interprété par un dispositif de mesure associé au capteur comme étant un état défaillant de l'alimentation du capteur.

Dans le capteur de la figure 7, on remarque que le capteur délivre trois informations respectivement 39, qui est la première représentation du signal de mesure, 38, qui est la seconde représentation du signal de mesure, et 44, qui est un signal d'état de l'alimentation.

A la figure 6, on a représenté le diagramme du courant dans le cas où le circuit de modulation de largeur d'impulsions 34 produit un signal en courant au lieu d'un signal en tension. Dans ce cas, l'étage de sortie du circuit 34 produit un signal à l'état bas dans une première gamme de courants faibles par exemple zéro et 2 milli-ampères ou à l'état haut dans une seconde gamme de courants forts par exemple entre 9 et 11 milli-ampères.

De ce fait, les deux plages sont prédéterminées et préenregistrées dans le dispositif de mesure associé au capteur de façon à déterminer d'éventuels dysfonctionnements de la modulation en largeur d'impulsions.

Dans un mode de réalisation particulier, le capteur est entièrement compris dans un boîtier et qui comporte au moins :
- une cellule de détection recevant une tension d'alimentation et produisant une information de mesure ;
- un oscillateur local raccordé à la cellule de détection ;
- un modulateur de largeur d'impulsions produisant une première représentation de l'information de mesure ;
- un amplificateur adapteur produisant une seconde représentation de l'information de mesure ;
- un circuit de transmission d'un signal représentatif de l'état d'alimentation du capteur ;
- un bornier de connexion de chacune des sorties précitées et d'au moins une tension d'alimentation et/ou un signal périodique à un câble de liaison à un dispositif de mesure associé.

Dans une telle disposition, le capteur doit recevoir simplement une tension d'alimentation qui peut par exemple être produite par le dispositif de mesure associé.

D'autre part, le capteur est connecté par un câble de transmission qui comporte au moins les trois signaux précités.

L'invention concerne aussi un dispositif de mesure associé. Un tel dispositif de mesure est connu en soi en ce qu'il exploite le signal de mesure proprement dit produit par la cellule de détection. Il est particulier à l'invention en ce sens qu'il permet de détecter d'éventuelles défaillances du capteur ainsi qu'on va le voir.

Le dispositif de mesure comporte tout d'abord un circuit 50 de détection d'un défaut de transition sur l'une des transitions du signal en modulation qui lui est fournit à son entrée 51. Dans le cas où la transition du signal est défaillante, le circuit de détection 50 produit sur sa sortie 52 un signal logique à l'état haut qui active un circuit d'alarme 53. La sortie du circuit d'alarme 53 produit une action par une sortie convenable 54. Dans un cas particulier, cette action peut consister en une remise à zéro de l'assistance quand il s'agit d'un dispositif de direction assistée. Dans ce cas, on peut générer par exemple une rampe d'assistance décroissante qui réduit progressivement jusqu'à zéro en un temps compatible avec la sécurité, l'effort d'assistance produit par la direction assistée.

A la figure 9, on a représenté les cas dans lesquels une transition dans le signal en modulation en largeur d'amplitude pourrait exister tout en étant fautive. En particulier ce cas peut exister quand la transition prend un temps qui dépasse une valeur prédéterminée. Dans ce cas on peut en inférer un type particulier de défaut propre au capteur. Dans ce cas, on détermine un instant t0 auquel le signal reçu passe par une valeur prédéterminée i0 par exemple égale à 2 milliampères. Puis on compte la durée pour que la transition du signal l'amène à un niveau égal à une deuxième valeur de référence il par exemple égale à 9 milli-ampères. Si la durée t1 - t0 dépasse un seuil prédéterminé, qui est par exemple fixé par une référence préenregistrée dans une mémoire 55 à la figure 8, et qui est fournie à une entrée 59 convenable du circuit de détection 50, l'action d'alarme est déclenchée.

A la figure 10, on a représenté un autre mode de détection d'une défaillance de transition dans le cas de la modulation en largeur d'impulsions. La valeur de l'information Vin fournie à l'entrée 51 du capteur est constituée par une suite de créneaux successivement composés par des transitions montantes 60 et descendantes 61. Dans le cas où une panne particulière du capteur survient, la transition 62 n'apparaît pas et le capteur délivre une tension Vin qui reste constante. Le circuit de détection 50, grâce à une table de valeurs préenregistrées dans une table de référence, comme la table 55 représentée à la figure 8, dispose d'une variation possible pour attendre l'existance de la transition 62 et par exemple comprise entre les valeurs temporelles t2 et t3 correspondantes à la variation maximum admissible à l'instant t normal de réception de la transition. Dans le cas où cette transition n'apparaît pas entre les valeurs t2 et t3, la sortie du circuit 50 passe à l'état actif et engendre une action d'alarme 54.

Le dispositif de mesure de l'invention comporte aussi un circuit de détection d'une dérive en fréquence dans le signal en modulation de largeurs d'impulsions. A cet effet, le signal en modulation de largeurs d'impulsions est introduit sur une borne d'entrée 61 d'un circuit de détection 60 qui reçoit aussi respectivement deux fréquences de référence respectivement une fréquence fmin enregistrée dans une mémoire 62 et introduite sur une borne d'entrée 63 du circuit ainsi qu'une fréquence maximum fmax enregistrée dans une mémoire 64 et transmise par une borne d'entrée 65 au circuit 60.

La valeur de la fréquence est mesurée par le circuit 60 et est comparée aux deux valeurs 63 et 65 de façon à engendrer un signal actif à la sortie 66 du circuit 60 si la fréquence mesurée par le circuit 60 ne se trouve pas comprise entre fmin et fmax.

A la figure 12, on a représenté un autre moyen de l'invention inclus dans un dispositif de mesure associé à un capteur de l'invention. Le circuit de détection 70 reçoit par ses entrées respectivement 71 et 72 les premier et second signaux produits respectivement par les sorties 39 et 38 du capteur de la figure 7 par exemple. Les deux signaux sont comparés au point de vue de leur cohérence de façon à produire en sortie 73 un signal à l'état haut s'ils ne se correspondent pas exactement. Dans ce cas, un circuit d'alarme 74 produit un signal d'action d'alarme 75 convenable.

Afin de regarder ou d'examiner la cohérence entre les signaux 71 et 72, le circuit 70 comporte deux entrées respectivement 76 et 77 connectées à des tables préenregistrées 78 et 79 respectivement dans lesquelles se trouvent les valeurs qui se correspondent des premier et second signaux 71 et 72, les valeurs d'entrée en 71 et 72 permettent d'adresser les tables 78 et 79. Si les deux valeurs adressées ne sont pas égales, le circuit 70 déclenche une sortie à l'état haut.

Dans un mode particulier de réalisation, cette détection de cohérence (ou de non cohérence) est surtout réalisée pendant que le capteur est à l'état stable. Dans ce cas, il suffit de regarder si la tension produite par l'amplificateur adaptateur 37 correspond à la valeur stable et ainsi que le rapport cyclique du signal 39 correspondant à la valeur stable RC1. Dans le cas contraire le circuit 70 déclenche une action d'alarme 75 par l'intermédiaire du circuit 74.

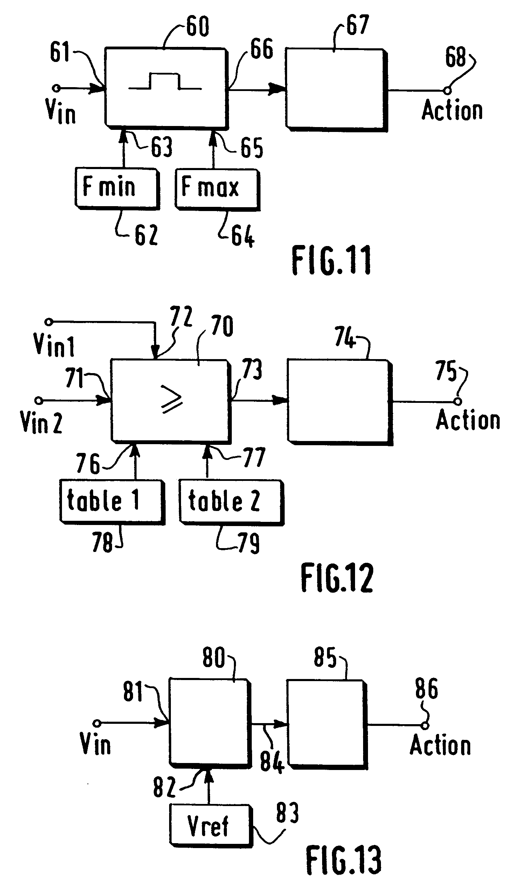

A la figure 13, on a représenté un autre moyen intégré dans le dispositif de mesure de l'invention. Le dispositif comporte un circuit de détection 80 d'une défaillance de l'alimentation du capteur. A cet effet, le circuit de détection 80 comporte une borne d'entrée 81 qui est connectée à la ligne d'alimentation par exemple par l'intermédiaire de l'amplificateur adaptateur 40 du capteur de la figure 7. D'autre part, le circuit de détection 80 comporte une entrée 82 qui est connectée à une tension de référence 83. Le circuit de détection 80 comporte un amplificateur monté en comparateur, dont le signal de sortie passe à l'état haut dès que la tension d'alimentation produite sur sa borne 81 descend sous la valeur de la tension de référence de sa borne 82. Dans ce cas la sortie 84 du circuit de détection 80 passe à l'état haut et active un circuit générateur d'une action d'alarme.

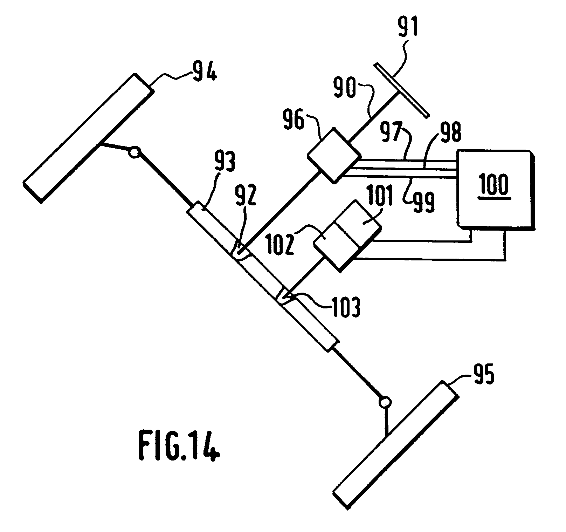

A la figure 14, on a représenté un dispositif de direction assistée de véhicule qui comporte un capteur et un dispositif de mesure selon l'invention. Dans un tel dispositif, le véhicule comporte une colonne de direction 90 dont une première extrémité est connectée à un volant 91 et dont l'autre extrémité entraîne un mécanisme de direction par exemple constitué par un ensemble pignon 92 - crémaillère 93. Les mouvements de la crémaillère sont transmis aux roues directrices respectivement 94 et 95.

Sur la colonne de direction 90 est monté un capteur de couple 96. Au moins une cellule de détection du capteur 96 mesure la déformation entre deux parties de la colonne 90 reliées par une barre de torsion ainsi qu'on l'a décrit précédemment.

Le capteur 96 produit trois signaux de sortie respectivement 97 correspondant à la tension d'alimentation 98 correspondant au signal analogique produit par le capteur et 99 au signal représentatif en modulation de largeurs d'impulsions. Ces signaux sont transmis à l'entrée d'un calculateur 100 de direction assistée de véhicule. La sortie du calculateur est une sortie de puissance qui émet une tension d'alimentation pour un moteur électrique 101 connecté par l'intermédiaire d'un embrayage 102 commandable sur un organe 103 d'assistance qui peut être par exemple connecté à la crémaillère. Dans un autre mode de réalisation, la sortie de l'embrayage est accouplée à un mécanisme réducteur dont l'étage de sortie est solidaire directement de la colonne de direction 90 avant l'extrémité 92.

Dans un tel dispositif de direction assistée, le calculateur de direction assistée intègre le dispositif de mesure décrit précédemment. Le capteur de couple 96 reproduit les caractéristiques principales du capteur décrit précédemment.

L'invention ne se limite pas à une application à la direction assistée électrique mais au contraire prend tout son développement avec le contenu des revendications annexées.

## Revendications

**1-** Capteur du type comportant au moins une cellule de détection d'une grandeur physique, alimenté par une tension d'alimentation et/ou par un signal périodique, caractérisé en ce que la cellule de détection produit un signal de sortie ou information de mesure, qui est fourni à l'entrée de modulation d'un circuit à modulation de largeur d'impulsion, dont l'entrée de référence reçoit ledit signal périodique, et dont le rapport cyclique est une représentation de l'information de mesure délivrée par la cellule de détectiion.

**2-** Capteur selon la revendication 1, caractérisé en ce que le signal de sortie de la cellule de détection étant bipolaire, l'information de signal de sortie nulle correspond à une valeur prédéterminée du rapport cyclique comme la moyenne algébrique entre les valeurs extrêmes atteintes par le rapport cyclique.

**3-** Capteur selon la revendication 1, caractérisé en ce que le signal de sortie de la cellule de détection est aussi fourni à l'entrée d'un amplificateur analogique, dont l'amplitude de sortie est une seconde représentation de l'information de mesure délivrée par la cellule de détection.

**4-** Capteur selon l'une des revendications précédentes, caractérisé en ce que le signal de sortie du circuit de modulation est en forme de courant, le niveau bas de sortie correspondant à une première gamme de courants faibles, le niveau haut de sortie correspondant à une seconde gamme de courants forts.

**5-** Capteur selon la revendication 1, caractérisé en ce que la tension d'alimentation du capteur est fournie à l'entrée d'un circuit de transmission d'un signal représentatif de l'état d'alimentation du capteur, comme un amplificateur adaptateur.

**6-** Capteur selon l'une quelconque des revendications précédentes, caractérisé en ce qu'il comporte, intégrés dans le boîtier au moins :
- une cellule de détection recevant une tension d'alimentation et produisant une information de mesure ;
- un oscillateur local raccordé à la cellule de détection ;
- un modulateur en largeur d'impulsions produisant une première représentation de l'information de mesure ;
- un amplificateur adapteur produisant une seconde représentation de l'information de mesure ;
- un circuit de transmission d'un signal représentatif de l'état d'alimentation du capteur ;
- un bornier de connexion de chacune des sorties précitées et d'au moins une tension d'alimentation et/ou un signal périodique à un câble de liaison à un dispositif de mesure associé.

**7-** Dispositif de mesure connecté à un capteur selon l'une des revendications précédentes, caractérisé en ce qu'il comporte un circuit de détection d'un défaut de transition sur l'une des transitions du signal en modulation à largeur d'impulsions, dont la sortie est connectée de façon à activer un circuit produisant une action d'alarme spécifique.

**8-** Dispositif selon la revendication 7, caractérisé en ce qu'il comporte un circuit de détection d'une dérive de fréquence dans le signal en modulation de largeur d'impulsion en dehors d'une plage de bon fonctionnement dont la sortie est connectée de façon à activer un circuit produisant une action d'alarme spécifique.

**9-** Dispositif selon la revendication 7, caractérisé en ce qu'il comporte de plus un circuit de détection du défaut de cohérence entre les première et seconde représentations de l'information de mesure dont la sortie est connectée de manière à activer un circuit produisant une action d'alarme spécifique.

**10-** Dispositif selon la revendication 9, caractérisé en ce que, dans un état du capteur correspondant à un signal de mesure de valeur nulle, les premier et second signaux de représentation de l'information de mesure ne sont pas tous les deux à leur état représentatif d'une valeur nulle du signal de mesure.

**11-** Dispositif selon la revendication 7, caractérisé en ce qu'il comporte de plus un circuit de détection d'une défaillance de l'alimentation du capteur qui reçoit le signal représentatif de l'état d'alimentation du capteur et dont la sortie est connectée de manière à activer un circuit produisant une action d'alarme spécifique.

**12-** Application à un dispositif de direction assistée de véhicule, comportant au moins un capteur selon l'une quelconque des revendications 1 à 6, et au moins un dispositif de mesure selon l'une quelconque des revendications 7 à 11, caractérisé en ce que le capteur est un capteur de couple volant et en ce que le dispositif de mesure est intégré dans un calculateur de direction assistée.

**13-** Application selon la revendication 12, caractérisée en ce que le calculateur comporte un circuit produisant une action d'alarme constituée par une remise à zéro de l'assistance, réalisée notamment par une rampe d'assistance décroissante sur un temps de sécurité déterminé.
